# EUROPEAN PATENT SPECIFICATION

(11) **EP 3 338 122 B1**
(45) Date of publication and mention of the grant of the patent: **25.09.2019**
(21) Application number: 16763320.5
(22) Date of filing: 17.08.2016
(51) Int. Cl.: G02B 6/38, G02B 6/245

(54) **AUTOMATIC FIBER STRIPPING SYSTEM AND METHOD**
SYSTEM UND VERFAHREN ZUR AUTOMATISCHEN FASERABISOLIERUNG
SYSTÈME ET PROCÉDÉ DE DÉNUDATION AUTOMATIQUE DE FIBRE

(30) Priority: 17.08.2015 CN 201510504106
(43) Date of publication of application: 27.06.2018
(73) Proprietor: Tyco Electronics (Shanghai) Co., Ltd., China (Shanghai) Pilot Free Trade Zone Shanghai (CN); TE Connectivity Corporation, Berwyn, PA 19312 (US); Shenzhen AMI Technology Co. Ltd, Shenzhen Guangdong 518108 (CN)
(72) Inventor: XIE, Fengchu, Shanghai (CN); ZENG, Qinglong, Shenzhen Guangdong 518108 (CN); ZHANG, Yu, Shanghai (CN); ZHANG, Dandan, Shanghai (CN); HU, Lvhai, Shanghai (CN); LU, Roberto Francisco-Yi, Berwyn, PA 19312 (US)
(74) Representative: Grünecker Patent- und Rechtsanwälte PartG mbB
(86) International application number: PCT/IB2016/054922
(87) International publication number: WO 2017/029616

(56) References cited:
- US-A1- 2014 124 140
- US-B1- 6 434 314

## Description

### BACKGROUND OF THE INVENTION

### Field of the Invention

Embodiments of the present disclosure relate to an automatic fiber stripping system and method.

### Description of the Related Art

A fiber optic connector generally comprises a housing and a ferrule assembly assembled in the housing. The ferrule assembly comprises a ferrule and optical fibers inserted into bores of the ferrule. An existing method of manufacturing the ferrule assembly typically comprises: firstly, stripping off a length of an outer coating layer of a cable so as to expose the length of bare fiber; secondly, cleaning the exposed bare fiber so as to remove residues on the fiber, for example, residues of the outer coating layer; thirdly, inserting the cleaned bare fiber into the bores of the ferrule; finally, heating and curing an adhesive in the ferrule so as to secure the fiber in the ferrule. As a result, the ferrule assembly is completely manufactured.

In the prior art, the outer coating layer is generally stripped off the cable manually. The manual stripping method has a low efficiency, and it is easy to damage the fiber during stripping off the outer coating layer, thereby reducing an optical performance of the fiber.

The US American patent application US 2014/0124140 A1 discloses a portable device for attaching a connector to an optical fiber, the device having means for receiving and stripping an end of the optical fiber.

### SUMMARY OF THE INVENTION

The present disclosure aims to solve at least one aspect of the above issues and disadvantages in the prior art.

An objective of the present disclosure is to provide an automatic fiber stripping system, which is capable of stripping off a segment of an outer coating layer of an optical cable automatically, and optical fibers would not be damaged during stripping off the outer coating layer so that an optical performance of the optical fibers may be ensured.

According to an aspect of the present disclosure, it is provided an automatic fiber stripping system, comprising: a first stripping module, a second stripping module and a heating device. The first stripping module comprises: a first stripping belt; a first driven belt wheel on which an unused portion of the first stripping belt is wound; a first driving belt wheel on which a used portion of the first stripping belt is wound; and a first stripping tool having a blade portion adapted to cut a notch in at least one of two side edges of an outer coating layer of an optical cable; and a pressing portion adapted to press the first stripping belt, the first stripping belt is tightened on the pressing portion of the first stripping tool. The second stripping module comprises: a second stripping belt; a second driven belt wheel on which an unused portion of the second stripping belt is wound; a second driving belt wheel on which a used portion of the second stripping belt is wound; and a second stripping tool having a pressing portion adapted to press the second stripping belt, the second stripping belt is tightened on the pressing portion of the second stripping tool. The heating device is configured to heat the outer coating layer of the optical cable, so as to soften the outer coating layer of the optical cable. The first stripping tool and the second stripping tool are cooperated with each other to press the first stripping belt and the second stripping belt on both sides of the optical cable, respectively, so that the optical cable is clamped between the first stripping belt and the second stripping belt. The first stripping belt and the second stripping belt are moved relative to the optical cable under the drive of the first driving belt wheel and the second driving belt wheel, so as to strip off a segment of the outer coating layer, which has been softened by the heating device, from the notch.

According to an exemplary embodiment of the present disclosure, the heating device comprises: a first heating device adapted to heat the first stripping tool and then the outer coating layer of the clamped optical cable through the first stripping tool; and a second heating device adapted to heat the second stripping tool and then the outer coating layer of the clamped optical cable through the second stripping tool.

According to an exemplary embodiment of the present disclosure, the first heating device has a first heat conductive block, the first stripping tool being mounted on the first heat conductive block or thermally contacting the first heat conductive block directly; and the second heating device has a second heat conductive block, the second stripping tool being mounted on the second heat conductive block or thermally contacting the second heat conductive block directly.

According to an exemplary embodiment of the present disclosure, the first stripping module further comprises a first sensor adapted to detect whether the first stripping belt has been used out; and the second stripping module further comprises a second sensor adapted to detect whether the second stripping belt has been used out.

According to an exemplary embodiment of the present disclosure, the first stripping module further comprises a pair of first rollers which are located at two sides of the first stripping tool, the first stripping belt being tightened on the pair of first rollers and the first stripping tool; and the second stripping module further comprises a pair of second rollers which are located at two sides of the second stripping tool, the second stripping belt being tightened on the pair of second rollers and the second stripping tool.

According to an exemplary embodiment of the present disclosure, the first stripping module further comprises a first tightening roller adapted to adjust a tension of the first stripping belt; and the second stripping module further comprises a second tightening roller adapted to adjust a tension of the second stripping belt.

According to an exemplary embodiment of the present disclosure, the first stripping module is mounted on a first mounting plate and the second stripping module is mounted on a second mounting plate; and the first mounting plate and the second mounting plate are arranged to be movable relative to each other, so that the first stripping tool and the second stripping tool are movable relative to each other so as to loose or clamp the optical cable.

According to an exemplary embodiment of the present disclosure, the first mounting plate and the second mounting plate are movably mounted on the same vertical stationary baseplate; and the first mounting plate is located right above the second mounting plate.

According to an exemplary embodiment of the present disclosure, a rail extending vertically is arranged on the stationary baseplate; a first slider is arranged on the first mounting plate and slidably engaged with the rail so as to move upward and downward along the rail; and a second slider is arranged on the second mounting plate and slidably engaged with the rail so as to move upward and downward along the rail.

According to an exemplary embodiment of the present disclosure, the automatic fiber stripping system further comprises: an air-jet device adapted to jet air towards the first stripping tool and the second stripping tool, so as to remove residues of the outer coating layer adhered on the first stripping tool and the second stripping tool.

According to an exemplary embodiment of the present disclosure, the air-jet device is mounted on one of the first mounting plate and the second mounting plate.

According to an exemplary embodiment of the present disclosure, the automatic fiber stripping system further comprises: a cable carrying mechanism adapted to place a cable to be stripped on the second stripping tool and to move the stripped cable out of the second stripping tool.

According to an exemplary embodiment of the present disclosure, the automatic fiber stripping system further comprises: a plate driving mechanism adapted to move the first mounting plate so as to allow the first stripping tool mounted on the first mounting plate to be movable relative to the second stripping tool mounted on the second mounting plate.

According to an exemplary embodiment of the present disclosure, the automatic fiber stripping system further comprises: a cover plate mounted on the stationary baseplate. A space for receiving the first stripping module and the second stripping module is defined between the cover plate and the baseplate, and the cover plate is provided with an opening, through which the cable is allowed to be placed between the first stripping tool and the second stripping tool.

According to an exemplary embodiment of the present disclosure, the second stripping tool further comprising a blade portion adapted to cut a further notch in at least one of two side edges of the outer coating layer of the optical cable.

According to another aspect of the present disclosure, it is provided an automatic fiber stripping method, comprising:
clamping a cable to be stripped between a first tightened stripping belt and a second tightened stripping belt, and cutting a notch in at least one of two side edges of an outer coating layer of the cable;
heating the outer coating layer of the cable formed with the notch so as to soften the outer coating layer of the cable;
driving the first stripping belt and the second stripping belt to move, so as to strip off a segment of the outer coating layer, which has been softened, from the notch by the first stripping belt and the second stripping belt;
separating the first tightened stripping belt and the second tightened stripping belt; and
removing the cable, the segment of the outer coating layer of which has been stripped off.

According to an exemplary embodiment of the present disclosure, the automatic fiber stripping method further comprises:
after stripping off the segment of the outer coating layer of the cable, jetting air towards the first stripping tool and the second stripping tool, so as to remove residues of the outer coating layer adhered on the first stripping tool and the second stripping tool.

According to an exemplary embodiment of the present disclosure, the cable is kept stationary during stripping off the segment of the outer coating layer with the first stripping belt and the second stripping belt.

According to an exemplary embodiment of the present disclosure, the segment of the outer coating layer of the cable is stripped off by using the automatic fiber stripping system according to any one of the above embodiments.

In the above embodiments, by using the automatic fiber stripping system, the segment of the outer coating layer of the optical cable is allowed to be stripped off automatically, so that an efficiency for stripping off the outer coating layer of the optical cable may be increased, and optical fibers would not be damaged during stripping off the outer coating layer, so that an optical performance of the optical fibers may be ensured.

Other objectives and advantages of the present disclosure will become more apparent by describing the present disclosure with reference to the following accompanying drawings, and this description may also aid to give a complete comprehension of the present disclosure.

### BRIEF DESCRIPTION OF THE DRAWINGS

The above and other features of the present disclosure will become more apparent by describing in detail exemplary embodiments thereof with reference to the accompanying drawings, in which:
Fig.1 is a schematic perspective view of a multi-bore ferrule according to an embodiment of the present disclosure;
Fig.2 is a schematic perspective view of a ribbon cable according to an embodiment of the present disclosure;
Fig.3 is a schematic perspective view of an automatic fiber stripping system according to an embodiment of the present disclosure;
Fig.4 is a rear view of the automatic fiber stripping system in Fig.3, in which a heating device is shown;
Fig.5 is a schematic perspective view of an automatic fiber stripping system according to an embodiment of the present disclosure, in which a cover plate is shown; and
Fig.6 is a schematic perspective view of a cable carrying mechanism of an automatic fiber stripping system according to an embodiment of the present disclosure.

### DETAILED DESCRIPTION OF PREFERRED EMBODIMENTS OF THE IVENTION

The technical solutions of the present disclosure will be further explained specifically in the following embodiments in combination with accompanying drawings. The same or similar reference numbers indicate the same or similar parts in the specification. The following explanation of the embodiments of the present disclosure with reference to the drawings intends to explain the general inventive concept of the present invention, but cannot be interpreted as a limitation to the present invention.

Moreover, in the following detailed description, for the purpose of explanation, a number of specific details are explained in order to provide a complete comprehension to the disclosed embodiments. However, it is obvious that one or more embodiments may be implemented without these specific details. In other cases, well known structures and devices are embodied in a form of illustration to simplify the drawings.

According to a general technical concept of the present invention, it is provided an automatic fiber stripping system, comprising: a first stripping module, a second stripping module and a heating device. The first stripping module comprises: a first stripping belt; a first driven belt wheel on which an unused portion of the first stripping belt is wound; a first driving belt wheel on which a used portion of the first stripping belt is wound; and a first stripping tool having a blade portion adapted to cut a notch in at least one of two side edges of an outer coating layer of an optical cable; and a pressing portion adapted to press the first stripping belt, the first stripping belt is tightened on the pressing portion of the first stripping tool. The second stripping module comprises: a second stripping belt; a second driven belt wheel on which an unused portion of the second stripping belt is wound; a second driving belt wheel on which a used portion of the second stripping belt is wound; and a second stripping tool having a pressing portion adapted to press the second stripping belt, the second stripping belt is tightened on the pressing portion of the second stripping tool. The heating device is configured to heat the outer coating layer of the optical cable, so as to soften the outer coating layer of the optical cable. The first stripping tool and the second stripping tool are cooperated with each other to press the first stripping belt and the second stripping belt on both sides of the optical cable, respectively, so that the optical cable is clamped between the first stripping belt and the second stripping belt. The first stripping belt and the second stripping belt are moved relative to the optical cable under the drive of the first driving belt wheel and the second driving belt wheel, so as to strip off a segment of the outer coating layer, which has been softened by the heating device.

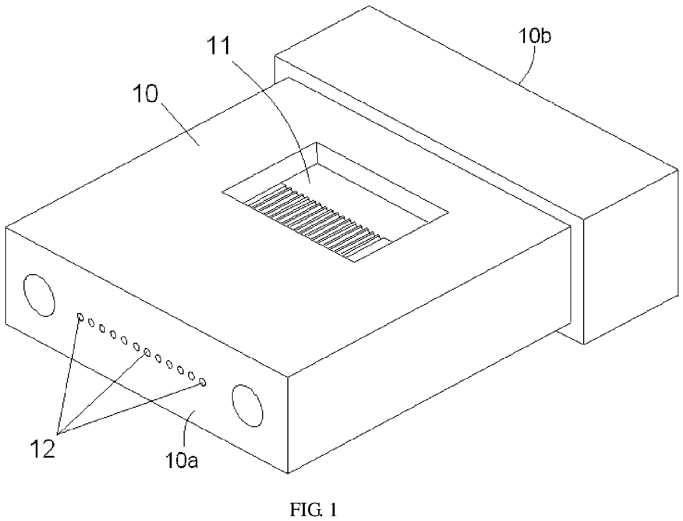

Fig.1 is a schematic perspective view of a multi-bore ferrule 10 according to an embodiment of the present disclosure.

As shown in Fig.1, the multi-bore ferrule 10 has a plurality of bores 12 extending longitudinally along the multi-bore ferrule 10 and an injection opening 11 formed on a top of the multi-bore ferrule 10.

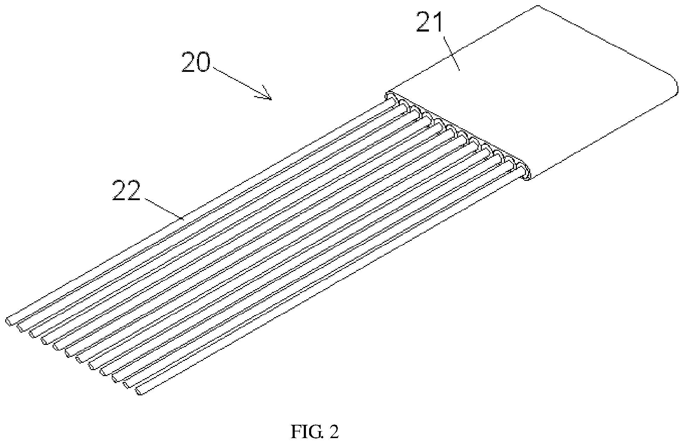

Fig.2 is a schematic perspective view of a ribbon cable 20 according to an embodiment of the present disclosure.

As shown in Fig.2, the ribbon cable 20 has a plurality of optical fibers 22 and a cladding layer 21 covering the optical fibers 22. A length of the cladding layer 21 is stripped off so as to expose a part of the optical fibers 22.

As shown in Figs.1 and 2, in an embodiment of the present disclosure, the ferrule assembly to be manufactured comprises the multi-bore ferrule 10 as shown in Fig.1 and the optical fibers 22 inserted and secured into the bores 12 of the multi-bore ferrule 10.

In the embodiment, the optical fibers 22 are inserted from an insertion port at a rear end 10b of the multi-bore ferrule 10 and protrude by a predefined distance from a front end 10a of the multi-bore ferrule 10.

In the embodiment, surfaces of the optical fibers 22 are required to be cleaned before the optical fibers 22 are inserted into the bores 12 of the multi-bore ferrule 10.

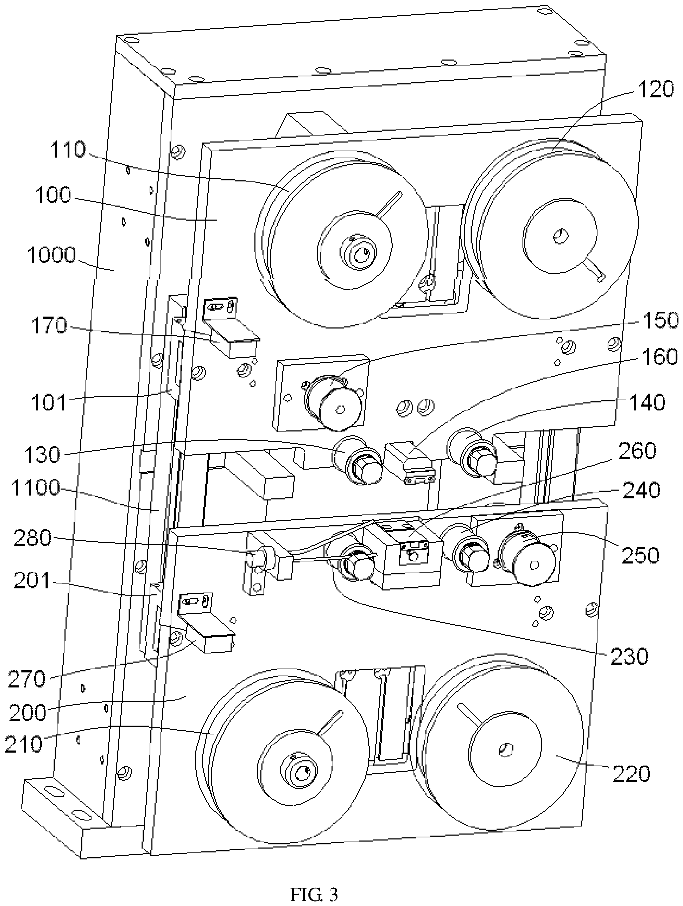

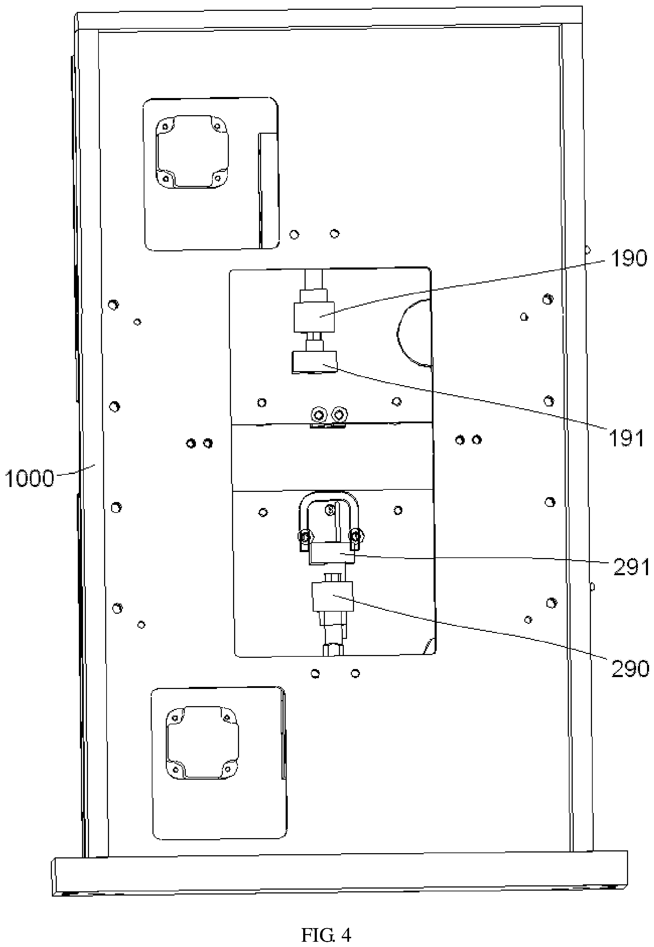

Fig.3 is a schematic perspective view of an automatic fiber stripping system according to an embodiment of the present disclosure, and Fig.4 is a rear view of the automatic fiber stripping system in Fig.3, in which a heating device is shown;

In an exemplary embodiment, an automatic fiber stripping system is disclosed. As shown in Figs.3 and 4, the automatic fiber stripping system mainly comprises a first stripping module (also referred as an upper stripping module), a second stripping module (also referred as a lower stripping module) and a heating device.

As shown in Fig.3, the first stripping module mainly comprises: a first stripping belt (not shown); a first driven belt wheel 120, a first driving belt wheel 110 and a first stripping tool 160. An unused portion (i.e. a portion which has not brought into contact with the outer coating layer 21 of the optical cable 20) of the first stripping belt is wound on the first driven belt wheel 120. A used portion (i.e. a portion which has clamped the outer coating layer 21 of the optical cable 20 and is adhered with the stripped outer coating layer 21) of the first stripping belt is wound on the first driving belt wheel 110. A first stripping tool 160 has a blade portion adapted to cut a notch in at least one of two side edges of the outer coating layer 21 of the optical cable 20; and a pressing portion adapted to press the first stripping belt. Further, the first stripping belt between the first driving belt wheel 110 and the first driven belt wheel 120 is tightened on the pressing portion of the first stripping tool 160.

Similarly, as shown in Fig.3, the second stripping module mainly comprises: a second stripping belt (not shown); a second driven belt wheel 220, a second driving belt wheel 210 and a second stripping tool 260. An unused portion (i.e. a portion which has not brought into contact with the outer coating layer 21 of the optical cable 20) of the second stripping belt is wound on the second driven belt wheel 220. A used portion (i.e. a portion which has clamped the outer coating layer 21 of the optical cable 20 by cooperating with the first stripping tool 160 and is adhered with the stripped outer coating layer 21) of the second stripping belt is wound on the second driving belt wheel 210. A second stripping tool 260 has a blade portion adapted to cut a further notch in at least one of two side edges of the outer coating layer 21 of the optical cable 20 and a pressing portion adapted to press the second stripping belt. Further, the second stripping belt between the second driving belt wheel 210 and the second driven belt wheel 220 is tightened at the second stripping tool 260.

It is appreciated for a person skilled in the art that the blade portions of the first and/or second stripping tools 160, 260 may be constructed to cut the notches in the vertical or horizontal direction of the outer coating layer 21 of the optical cable 20 as long as the first and/or second stripping belts do not intervene in the blade portions. As shown in Figs.3 and 4, the heating devices 190, 290 are configured to heat the outer coating layer 21 of the optical cable 20, so as to soften the outer coating layer 21 of the optical cable 20.

In an exemplary embodiment, as shown in Fig.3, the first stripping tool 160 and the second stripping tool 260 are adapted to cooperate with each other to press the first stripping belt and the second stripping belt against both sides of the optical cable 20, respectively, so that the optical cable 20 is clamped between the first stripping belt and the second stripping belt. In this way, while the first stripping belt and the second stripping belt are moved relative to the optical cable 20 under the drive of the first driving belt wheel 110 and the second driving belt wheel 210, the first stripping belt and the second stripping belt are cooperated with each other to clamp two opposite surfaces of the outer coating layer 21, which has been formed with the notch in at least one of two side edges thereof by the blade portions of the first and/or second stripping tools 160, 260 and softened by the heating device 190, 290, so that the outer coating layer 21 of the optical cable 20 is automatically stripped off by the first driving belt wheel 110 and the second driving belt wheel 210.

In an exemplary embodiment, as shown in Figs.3 and 4, the heating devices 190, 290 comprise a first heating device 190 and a second heating device 290. The first heating device 190 is adapted to heat the first stripping tool 160 and then heat the outer coating layer 21 of the clamped optical cable 20 through the first stripping tool 160. The second heating device 290 is adapted to heat the second stripping tool 260 and then heat the outer coating layer 21 of the clamped optical cable 20 through the second stripping tool 260.

In an exemplary embodiment, as shown in Figs.3 and 4, the first heating device 190 has a first heat conductive block 191 on which the first stripping tool 160 is mounted or which thermally contacts the first stripping tool 160 directly. Similarly, the second heating device 290 has a second heat conductive block 291 on which the second stripping tool 260 is mounted or which thermally contacts the second stripping tool 260 directly.

In an exemplary embodiment, as shown in Fig.3, the first stripping module further comprises a first sensor 170 adapted to detect whether the first stripping belt has been used out. Similarly, the second stripping module further comprises a second sensor 270 adapted to detect whether the second stripping belt has been used out. In the illustrated embodiment, the first sensor 170 and the second sensor 270 may comprise visual sensors.

In an exemplary embodiment, as shown in Fig.3, the first stripping module further comprises a pair of first rollers 130, 140 which are located at two sides of the first stripping tool 160, respectively, and the first stripping belt is tightened on the pair of first rollers 130, 140 and the first stripping tool 160. Similarly, the second stripping module further comprises a pair of second rollers 230, 240 which are located at two sides of the second stripping tool 260, respectively, and the second stripping belt 260 is tightened on the pair of second rollers 230, 240 and the second stripping tool 260.

In an exemplary embodiment, as shown in Fig.3, the first stripping module further comprises a first tightening roller 150 adapted to adjust a tension of the first stripping belt. For example, the tension of the first stripping belt may be adjusted by fixing the first tightening roller 150 at different positions. Similarly, the second stripping module further comprises a second tightening roller 250 adapted to adjust a tension of the second stripping belt. For example, the tension of the second stripping belt may be adjusted by fixing the second tightening roller 250 at different positions.

In an exemplary embodiment, as shown in Fig.3, the first stripping module is mounted on a first mounting plate 100 and the second stripping module is mounted on a second mounting plate 200. In the illustrated embodiment, the first mounting plate 100 and the second mounting plate 200 are arranged to be movable relative to each other, so that the first stripping tool 160 and the second stripping tool 260 are movable relative to each other so as to loose or clamp the optical cable 20.

In the illustrated embodiment as shown in Fig.3, the first mounting plate 100 and the second mounting plate 200 are movably mounted on the same vertical stationary baseplate 1000, and the first mounting plate 100 is located right above the second mounting plate 200.

In the illustrated embodiment as shown in Fig.3, a rail 1100 extending vertically is arranged on the stationary baseplate 1000. A first slider 101 is arranged on the first mounting plate 100 and slidably engaged with the rail 1100 so as to move upward and downward along the rail 1100. And a second slider 201 is arranged on the second mounting plate 200 and slidably engaged with the rail 1100 so as to move upward and downward along the rail 1100.

Though not shown, in an embodiment, the automatic fiber stripping system may further comprise a plate driving mechanism adapted to drive the first mounting plate 100 to move respect to the stationary baseplate 1000 so as to allow the first stripping tool 160 mounted on the first mounting plate 100 to be movable relative to the second stripping tool 260 mounted on the second mounting plate 200.

In the illustrated embodiment as shown in Fig.3, the automatic fiber stripping system may further comprise an air-jet device 280 adapted to jet air towards the first stripping tool 160 and the second stripping tool 260, so as to remove residues of the outer coating layer 21 adhered on the first stripping tool 160 and the second stripping tool 260.

In an exemplary embodiment, as shown in Fig.3, the air-jet device 280 is mounted on one of the first mounting plate 100 and the second mounting plate 200. In the illustrated embodiment, the air-jet device 280 is mounted on the second mounting plate 200.

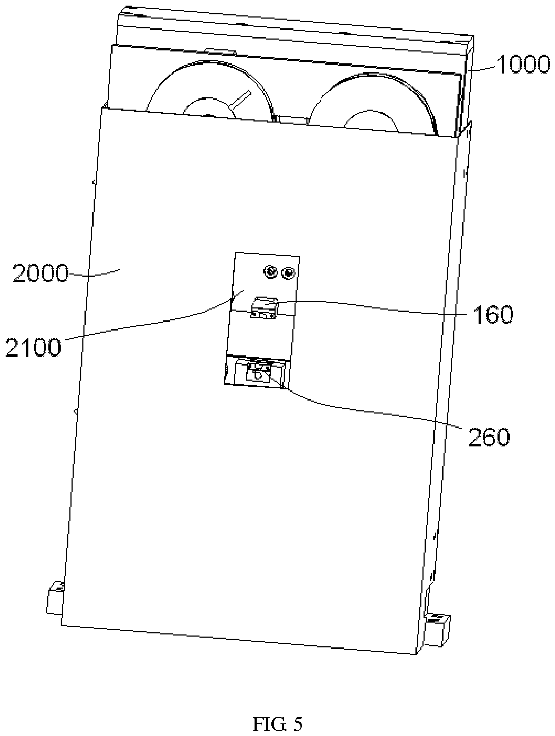

Fig.5 is a schematic perspective view of an automatic fiber stripping system according to an embodiment of the present disclosure, in which a cover plate 2000 is shown.

In an exemplary embodiment, as shown in Figs.3 to 5, the automatic fiber stripping system may further comprise a cover plate 2000 mounted on the stationary baseplate 1000. A space for receiving the first stripping module and the second stripping module is defined between the cover plate 2000 and the baseplate 1000. In this way, the residues of the outer coating layer 21 blown off the first stripping tool 160 and the second stripping tool 260 will fall into a bottom of the space, instead of flying around.

As shown in Fig.5, the cover plate 2000 is provided with an opening 2100, through which the optical cable 20 is allowed to be placed between the first stripping tool 160 and the second stripping tool 260.

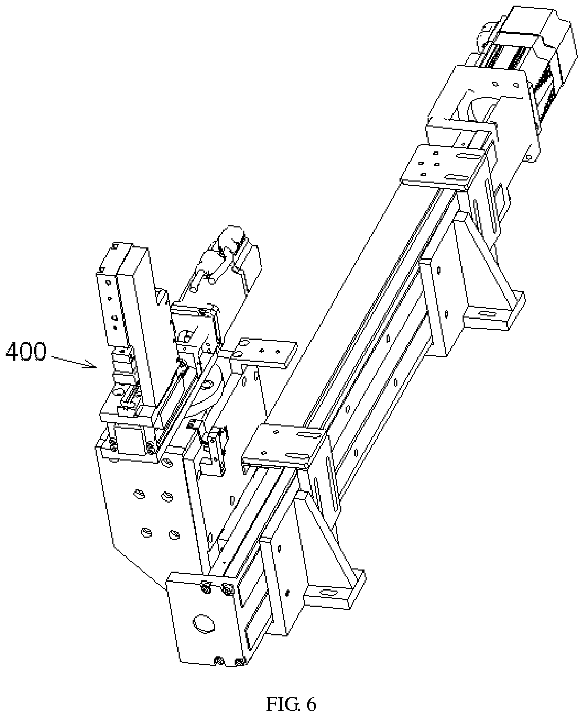

Fig.6 is a schematic perspective view of a cable carrying mechanism of an automatic fiber stripping system according to an embodiment of the present disclosure.

In an exemplary embodiment, as shown in Fig.6, the automatic fiber stripping system may further comprise a cable carrying mechanism 400. The cable carrying mechanism 400 is adapted to place the optical cable 20 to be stripped on the second stripping belt located right above the second stripping tool 260 and to move the stripped optical cable 20 out of the second stripping tool 260.

In an exemplary embodiment, as shown in Fig.6, the cable carrying mechanism 400 comprises a carrier movable in a first direction, a second direction and a third direction which are perpendicular to each other. The optical cable 20 may be held and fixed in a clamp of the cable carrying mechanism 400 by the carrier. However, the present disclosure is not limited to the illustrated embodiment, the cable carrying mechanism 400 may also comprise a manipulator or a robot which is adapted to hold and move the optical cable 20.

In an exemplary embodiment, the optical cable 20 is kept stationary by the cable carrying mechanism 400 during stripping off the outer coating layer 21 of the optical cable 20 with the first stripping belt and the second stripping belt.

In the above embodiments, the first stripping belt and the second stripping belt may be a clean woven belt or any other suitable stripping belts.

Next, an automatic fiber stripping method according to an embodiment of the present disclosure will be explained in detail with reference to Figs.1 to 6. The automatic fiber stripping method mainly comprises steps of:
moving upward the first mounting plate 100 to separate the first stripping tool 160 and the second stripping tool 260, and separate the first tightened stripping belt and the second tightened stripping belt;
fixing the optical cable 20 to be stripped on the cable carrying mechanism 400;
placing the optical cable 20 to be stripped on the second stripping belt located right above the second stripping tool 260 by the cable carrying mechanism 400;
driving the first mounting plate 100 to move downward so as to clamp the optical cable 20 to be stripped between the first tightened stripping belt and the second tightened stripping belt;
cutting a notch in at least one of two side edges of the outer coating layer 21 of the optical cable 20 by the first stripping tool 160 and/or the second stripping tool 260;
heating the outer coating layer 21 of the optical cable 20 formed with the notch so as to soften the outer coating layer 21 of the optical cable 20;
driving the first stripping belt and the second stripping belt to move by the first driving belt wheel 110 and the second driving belt wheel 210 so as to strip off a segment of the outer coating layer 21 of the optical cable 20, which has been softened, from the notch by the first stripping belt and the second stripping belt;
moving upward the first mounting plate 100 to separate the first tightened stripping belt and the second tightened stripping belt; and
removing the optical cable, the segment of the outer coating layer of which has been stripped off, by the cable carrying mechanism 400.

In an exemplary embodiment of the present disclosure, the method may further comprise a step of:
after stripping off the segment of the outer coating layer 21 of the optical cable 20, jetting air towards the first stripping tool 160 and the second stripping tool 260 by the air-jet device 280, so as to remove residues of the outer coating layer 21 adhered on the first stripping tool 160 and the second stripping tool 260.

In an exemplary embodiment of the present disclosure, the optical cable 20 is kept stationary by the cable carrying mechanism 400 during stripping off the segment of the outer coating layer 21 of the optical cable 20 by the first stripping belt and the second stripping belt.

In the above embodiment, the stripped optical fibers comprise a plurality of bare fibers 22 of a ribbon cable 20, however, the present disclosure is not limited thereto, the stripped optical fibers may also comprise a single fiber of round cable.

Though the present invention is described with reference to the accompanying drawings, the disclosed embodiments with reference to the drawings intend to make an exemplary illustration to the implementations of the present invention, but cannot be interpreted as a limitation to the present invention.

It should be noted that, the term "comprising", "comprise", "including" and "include" should be understood as not excluding other elements or steps, the word "a" or "an" should be understood as not excluding plural of said elements or steps. In addition, any reference number in the claims should not be understood as limiting the scope of the present invention.

## Claims

1. An automatic fiber stripping system, comprising:
a first stripping module comprising:
a first stripping belt;
a first driven belt wheel (120) on which an unused portion of the first stripping belt is wound;
a first driving belt wheel (110) on which a used portion of the first stripping belt is wound; and
a first stripping tool (160) having a blade portion adapted to cut a notch in at least one of two side edges of an outer coating layer (21) of an optical cable (20); and a pressing portion adapted to press the first stripping belt, the first stripping belt being tightened on the pressing portion of the first stripping tool (160);
a second stripping module comprising:
a second stripping belt;
a second driven belt wheel (220) on which an unused portion of the second stripping belt is wound;
a second driving belt wheel (210) on which a used portion of the second stripping belt is wound;and
a second stripping tool (260) having a pressing portion adapted to press the second stripping belt, the second stripping belt is tightened on the pressing portion of the second stripping tool (260); and
a heating device (190, 290) configured to heat the outer coating layer (21) of the optical cable (20), so as to soften the outer coating layer (21) of the optical cable (20),
wherein the first stripping tool (160) and the second stripping tool (260) are cooperated with each other to press the first stripping belt and the second stripping belt on both sides of the optical cable (20), respectively, so that the optical cable (20) is clamped between the first stripping belt and the second stripping belt, and
wherein the first stripping belt and the second stripping belt are driven to move relative to the optical cable by the first driving belt wheel (110) and the second driving belt wheel (210), so as to strip off a segment of the outer coating layer (21), which has been softened by the heating device (190, 290), from the notch.

2. The automatic fiber stripping system according to claim 1, wherein, the heating device (190, 290) comprises:
a first heating device (190) adapted to heat the first stripping tool (160) and then the outer coating layer (21) of the clamped optical cable (20) through the first stripping tool (160); and
a second heating device (290) adapted to heat the second stripping tool (260) and then the outer coating layer (21) of the clamped optical cable (20) through the second stripping tool (260).

3. The automatic fiber stripping system according to claim 2, wherein,
the first heating device (190) has a first heat conductive block (191), the first stripping tool (160) being mounted on the first heat conductive block (191) or thermally contacting the first heat conductive block (191) directly; and
the second heating device (290) has a second heat conductive block (291), the second stripping tool (260) being mounted on the second heat conductive block (291) or thermally contacting the second heat conductive block (291) directly.

4. The automatic fiber stripping system according to claim 1, wherein,
the first stripping module further comprises a first sensor (170) adapted to detect whether the first stripping belt has been used out; and
the second stripping module further comprises a second sensor (270) adapted to detect whether the second stripping belt has been used out.

5. The automatic fiber stripping system according to claim 4, wherein,
the first stripping module further comprises a pair of first rollers (130, 140) which are located at two sides of the first stripping tool (160), the first stripping belt being tightened on the pair of first rollers (130, 140) and the first stripping tool (160); and
the second stripping module further comprises a pair of second rollers (230, 240) which are located at two sides of the second stripping tool (260), the second stripping belt being tightened on the pair of second rollers (230, 240) and the second stripping tool (260), and wherein
the first stripping module further comprises a first tightening roller (150) adapted to adjust a tension of the first stripping belt; and
the second stripping module further comprises a second tightening roller (250) adapted to adjust a tension of the second stripping belt.

6. The automatic fiber stripping system according to claim 5, wherein,
the first stripping module is mounted on a first mounting plate (100) and the second stripping module is mounted on a second mounting plate (200); and
a plate driving mechanism adapted to drive the first mounting plate (100) to move so as to allow the first stripping tool (160) mounted on the first mounting plate (100) to be movable relative to the second stripping tool (260) mounted on the second mounting plate (200)so as to loose or clamp the optical cable (20).

7. The automatic fiber stripping system according to claim 6, wherein,
the first mounting plate (100) and the second mounting plate (200) are movably mounted on the same vertical stationary baseplate (1000); and
the first mounting plate (100) is located right above the second mounting plate (200).

8. The automatic fiber stripping system according to claim 7, wherein,
a rail (1100) extending vertically is arranged on the stationary baseplate (1000);
a first slider (101) is arranged on the first mounting plate (100) and slidably engaged with the rail (1100) so as to move upward and downward along the rail (1100); and
a second slider (201) is arranged on the second mounting plate (200) and slidably engaged with the rail (1100) so as to move upward and downward along the rail (1100).

9. The automatic fiber stripping system according to claim 8, further comprising:
an air-jet device (280) adapted to jet air towards the first stripping tool (160) and the second stripping tool (260), so as to remove residues of the outer coating layer (21) adhered on the first stripping tool (160) and the second stripping tool (260).

10. The automatic fiber stripping system according to claim 9, wherein,
the air-jet device (280) is mounted on one of the first mounting plate (100) and the second mounting plate (200).

11. The automatic fiber stripping system according to claim 10, further comprising:
a cable carrying mechanism (400) adapted to place the optical cable (20) to be stripped on the second stripping tool (260) and to move the stripped optical cable (20) out of the second stripping tool (260).

12. The automatic fiber stripping system according to claim 11, further comprising:
a cover plate (2000) mounted on the stationary baseplate (1000),
wherein a space for receiving the first stripping module and the second stripping module is defined between the cover plate (2000) and the baseplate (1000), and the cover plate (2000) is provided with an opening (2100), through which the cable (20) is allowed to be placed between the first stripping tool (160) and the second stripping tool (260).

13. The automatic fiber stripping system according to claim 1, wherein the second stripping tool (160) further comprising a blade portion adapted to cut a further notch in at least one of two side edges of the outer coating layer (21) of the optical cable (20).

14. An automatic fiber stripping method, comprising:
clamping a cable (20) to be stripped between a first tightened stripping belt and a second tightened stripping belt, and cutting a notch in at least one of two side edges of an outer coating layer (21) of the cable (20);
heating the outer coating layer (21) of the cable (20) formed with the notch so as to soften the outer coating layer (21) of the cable (20);
driving the first stripping belt and the second stripping belt to move, so as to strip off a segment of the outer coating layer (21), which has been softened, from the notch by the first stripping belt and the second stripping belt;
separating the first tightened stripping belt and the second tightened stripping belt; and
removing the cable, the segment of the outer coating layer of which has been stripped off.

15. The automatic fiber stripping method according to claim 14, further comprising:
after stripping off the segment of the outer coating layer (21) of the cable (20), jetting air towards the first stripping tool (160) and the second stripping tool (260), so as to remove residues of the outer coating layer (21) adhered on the first stripping tool (160) and the second stripping tool (260).

## Patentansprüche

1. Automatisches Faserabstreifsystem, umfassend:
ein erstes Abstreifmodul, umfassend:
einen ersten Abstreifriemen;
ein erstes angetriebenes Riemenrad (120), auf das ein unbenutzter Abschnitt des ersten Abstreifriemens gewickelt ist;
ein erstes Antriebsriemenrad (110), auf das ein gebrauchter Abschnitt des ersten Abstreifriemens gewickelt ist; und
ein erstes Abstreifwerkzeug (160) mit einem Klingenabschnitt, der dazu eingerichtet ist, eine Kerbe in wenigstens eine von zwei Seitenkanten einer äußeren Ummantelungsschicht (21) eines optischen Kabels (20) zu schneiden; und einem Druckabschnitt, der dazu eingerichtet ist, den ersten Abstreifriemen zu drücken, wobei der erste Abstreifriemen auf den Druckabschnitt des ersten Abstreifwerkzeugs (160) gespannt ist;
ein zweites Abstreifmodul, umfassend:
einen zweiten Abstreifriemen;
ein zweites angetriebenes Riemenrad (220), auf das ein unbenutzter Abschnitt des zweiten Abstreifriemens gewickelt ist;
ein zweites Antriebsriemenrad (210), auf das ein benutzter Abschnitt des zweiten Abstreifriemens gewickelt ist; und
ein zweites Abstreifwerkzeug (260) mit einem Druckabschnitt, der dazu eingerichtet ist den zweiten Abstreifriemen zu drücken, wobei der zweite Abstreifriemen auf den Druckabschnitt des zweiten Abstreifwerkzeuges (260) gespannt ist; und
eine Heizvorrichtung (190, 290), die dazu eingerichtet ist, die äußere Ummantelungsschicht (21) des optischen Kabels (20) zu erwärmen, um die äußere Ummantelungsschicht (21) des optischen Kabels (20) zu erweichen,
wobei das erste Abstreifwerkzeug (160) und das zweite Abstreifwerkzeug (260) zusammenwirken, um den ersten Abstreifriemen sowie den zweiten Abstreifriemen jeweils auf beide Seiten des optischen Kabels (20) zu drücken, so dass das optische Kabel (20) zwischen dem ersten Abstreifriemen und dem zweiten Abstreifriemen eingespannt ist, und
der erste Abstreifriemen und der zweite Abstreifriemen so angetrieben werden, dass sie sich durch das erste Antriebsriemenrad (110) und das zweite Antriebsriemenrad (210) relativ zu dem optischen Kabel bewegen, um ein Segment der äußeren Ummantelungsschicht (21), die von der Heizvorrichtung (190, 290) erweicht wurde, ab der Kerbe abzustreifen.

2. Automatisches Faserabstreifsystem nach Anspruch 1, bei dem die Heizvorrichtung (190, 290) umfasst:
eine erste Heizvorrichtung (190), die dazu eingerichtet ist, das erste Abstreifwerkzeug (160) und dann die äußere Ummantelungsschicht (21) des geklemmten optischen Kabels (20) durch das erste Abstreifwerkzeug (160) zu erwärmen; und
eine zweite Heizvorrichtung (290), die dazu eingerichtet ist, das zweite Abstreifwerkzeug (260) und dann die äußere Ummantelungsschicht (21) des geklemmten optischen Kabels (20) durch das zweite Abstreifwerkzeug (260) zu erwärmen.

3. Automatisches Faserabstreifsystem nach Anspruch 2, bei dem
die erste Heizvorrichtung (190) einen ersten wärmeleitenden Block (191) aufweist, wobei das erste Abstreifwerkzeug (160) an dem ersten wärmeleitenden Block (191) angebracht ist oder den ersten wärmeleitenden Block (191) direkt thermisch kontaktiert; und
die zweite Heizvorrichtung (290) einen zweiten wärmeleitenden Block (291) aufweist, wobei das zweite Abstreifwerkzeug (260) an dem zweiten wärmeleitenden Block (291) angebracht ist oder den zweiten wärmeleitenden Block (291) direkt thermisch kontaktiert.

4. Automatisches Faserabstreifsystem nach Anspruch 1, bei dem
das erste Abstreifmodul weiterhin einen ersten Sensor (170) umfasst, der dazu eingerichtet ist zu erfassen, ob der erste Abstreifriemen verbraucht wurde; und
das zweite Abstreifmodul weiterhin einen zweiten Sensor (270) umfasst, der dazu eingerichtet ist zu erfassen, ob der zweite Abstreifriemen verbraucht ist.

5. Automatisches Faserabstreifsystem nach Anspruch 4, bei dem
das erste Abstreifmodul weiterhin ein Paar erster Walzen (130, 140) umfasst, die an zwei Seiten des ersten Abstreifwerkzeugs (160) angeordnet sind, wobei der erste Abstreifriemen auf das Paar erster Walzen (130, 140) und das erste Abstreifwerkzeug (160) gespannt ist; und
das zweite Abstreifmodul weiterhin ein Paar zweiter Walzen (230, 240) umfasst, die an zwei Seiten des zweiten Abstreifwerkzeugs (260) angeordnet sind, wobei der zweite Abstreifriemen über das Paar zweiter Walzen (230, 240) und das zweite Abstreifwerkzeug (260) gespannt ist, und
das erste Abstreifmodul weiterhin eine erste Spannrolle (150) aufweist, die dazu eingerichtet ist, eine Spannung des ersten Abstreifriemens einzustellen; und
das zweite Abstreifmodul weiterhin eine zweite Spannrolle (250) aufweist, die dazu eingerichtet ist, eine Spannung des zweiten Abstreifriemens einzustellen.

6. Automatisches Faserabstreifsystem nach Anspruch 5, bei dem
das erste Abstreifmodul auf einer ersten Montageplatte (100) montiert und das zweite Abstreifmodul auf einer zweiten Montageplatte (200) montiert ist; und
einen Plattenantriebsmechanismus dazu eingerichtet ist, die erste Montageplatte (100) anzutreiben, damit sich diese bewegt um zu ermöglichen, dass das auf der ersten Montageplatte (100) montierte erste Abstreifwerkzeug (160) relativ zu dem auf der zweiten Montageplatte (200) montierten zweiten Abstreifwerkzeug (260) bewegbar ist, um das optische Kabel (20) zu lösen oder festzuklemmen.

7. Automatisches Faserabstreifsystem nach Anspruch 6, bei dem
die erste Montageplatte (100) und die zweite Montageplatte (200) beweglich an derselben vertikalen stationären Grundplatte (1000) montiert sind; und
sich die erste Montageplatte (100) direkt über der zweiten Montageplatte (200) befindet.

8. Automatisches Faserabstreifsystem nach Anspruch 7, bei dem
auf der stationären Grundplatte (1000) eine sich vertikal erstreckende Schiene (1100) angeordnet ist;
ein erster Schieber (101) an der ersten Montageplatte (100) angeordnet ist und verschiebbar mit der Schiene (1100) in Eingriff steht, um sich entlang der Schiene (1100) aufwärts und abwärts zu bewegen; und
ein zweiter Schieber (201) auf der zweiten Montageplatte (200) angeordnet ist und verschiebbar mit der Schiene (1100) in Eingriff steht, um sich entlang der Schiene (1100) aufwärts und abwärts zu bewegen.

9. Automatisches Faserabstreifsystem nach Anspruch 8, weiterhin umfassend:
eine Luftstrahlvorrichtung (280), die dazu eingerichtet ist, Luft in Richtung des ersten Abstreifwerkzeugs (160) und des zweiten Abstreifwerkzeugs (260) abzustrahlen, um auf dem ersten Abstreifwerkzeug (160) und dem zweiten Abstreifwerkzeug (260) anhaftende Reste der äußeren Ummantelungsschicht (21) zu entfernen.

10. Automatisches Faserabstreifsystem nach Anspruch 9, bei dem
die Luftstrahlvorrichtung (280) entweder an der ersten Montageplatte (100) oder an der zweiten Montageplatte (200) montiert ist.

11. Automatisches Faserabstreifsystem nach Anspruch 10, weiterhin umfassend:
einen Kabelträgermechanismus (400), der dazu eingerichtet ist, das abzustreifende optische Kabel (20) an dem zweiten Abstreifwerkzeug (260) anzuordnen und das abgestreifte optische Kabel (20) aus dem zweiten Abstreifwerkzeug (260) herauszubewegen.

12. Automatisches Faserabstreifsystem nach Anspruch 11, weiterhin umfassend:
eine Abdeckplatte (2000), die an der stationären Grundplatte (1000) angebracht ist,
wobei ein Raum zur Aufnahme des ersten Abstreifmoduls und des zweiten Abstreifmoduls zwischen der Abdeckplatte (2000) und der Grundplatte (1000) definiert ist und die Abdeckplatte (2000) mit einer Öffnung (2100) versehen ist, durch die das Kabel (20) zwischen dem ersten Abstreifwerkzeug (160) und dem zweiten Abstreifwerkzeug (260) gelegt werden kann.

13. Automatisches Faserabstreifsystem nach Anspruch 1, bei dem das zweite Abstreifwerkzeug (160) weiterhin einen Klingenabschnitt umfasst, der dazu eingerichtet ist, eine weitere Kerbe in wenigstens eine von zwei Seitenkanten der äußeren Ummantelungsschicht (21) des Optischen Kabels (20) zu schneiden.

14. Automatisches Faserabstreifverfahren, umfassend:
Klemmen eines abzustreifenden Kabels (20) zwischen einen ersten gespannten Abstreifriemen und einen zweiten gespannten Abstreifriemen und Schneiden einer Kerbe in wenigstens eine der beiden Seitenkanten einer äußeren Ummantelungsschicht (21) des Kabels (20);
Erwärmen der äußeren Ummantelungsschicht (21) des Kabels (20), die mit der Kerbe ausgebildet ist, um die äußere Ummantelungsschicht (21) des Kabels (20) zu erweichen;
Antreiben des ersten Abstreifriemens und des zweiten Abstreifriemens, um diese zu bewegen, um ein Segment der äußeren Ummantelungsschicht (21), das erweicht wurde, von der Kerbe durch den ersten Abstreifriemen und den zweiten Abstreifriemen abzustreifen;
Trennen des ersten gespannten Abstreifriemens und des zweiten gespannten Abstreifriemens;
und Entfernen des Kabels, dessen Segment der äußeren Ummantelungsschicht abgestreift worden ist.

15. Automatisches Faserabstreifverfahren nach Anspruch 14, weiterhin umfassend:
nach dem Abstreifen des Segments der äußeren Ummantelungsschicht (21) des Kabels (20), Ausstoßen von Luft in Richtung des ersten Abstreifwerkzeugs (160) und des zweiten Abstreifwerkzeugs (260), um Reste der äußeren Ummantelungsschicht (21) zu entfernen, die auf dem ersten Abstreifwerkzeug (160) und dem zweiten Abstreifwerkzeug (260) haften.

## Revendications

1. Système de dénudage automatique de fibre, comprenant: un premier module de dénudage comprenant:
une première courroie de dénudage;
une première roue à courroie entraînée (120) sur laquelle est enroulée une partie inutilisée de la première courroie de dénudage;
une première roue à courroie d'entraînement (110) sur laquelle est enroulée une partie utilisée de la première courroie de dénudage; et
un premier outil de dénudage (160) ayant une partie lame conçue pour découper une encoche dans au moins l'un de deux bords latéraux d'une couche de revêtement externe (21) d'un câble optique (20); et une partie de pression conçue pour comprimer la première courroie de dénudage, la première courroie de dénudage étant tendue sur la partie de pression du premier outil de dénudage (160);
un courrier module de dénudage comprenant:
une seconde courroie de dénudage;
une seconde roue à courroie entraînée (220) sur laquelle est enroulée une partie inutilisée de la seconde courroie de dénudage;
une seconde roue à courroie d'entraînement (210) sur laquelle est enroulée une partie utilisée de la seconde courroie de dénudage; et
un second outil de dénudage (260) ayant une partie compression conçue pour comprimer la seconde courroie de dénudage, la seconde courroie de dénudage est tendue sur la partie compression du second outil de dénudage (260); et
un dispositif de chauffage (190, 290) configuré pour chauffer la couche de revêtement externe (21) du câble optique (20), de manière à adoucir la couche de revêtement externe (21) du câble optique (20),
dans laquelle le premier outil de dénudage (160) et le second outil de dénudage (260) coopèrent l'un avec l'autre pour comprimer respectivement la première courroie de dénudage et la seconde courroie de dénudage des deux côtés du câble optique (20), de sorte que le câble optique (20) est serré entre la première courroie de dénudage et la seconde courroie de dénudage, et
dans laquelle la première courroie de dénudage et la seconde courroie de dénudage sont entraînées pour se déplacer par rapport au câble optique par la première roue de courroie d'entraînement (110) et la second roue de courroie d'entraînement (210), de manière à dénuder un segment de la couche de revêtement externe (21), qui a été ramolli par le dispositif de chauffage (190, 290), par rapport à l'encoche.

2. Système automatique de dénudage de fibres selon la revendication 1, dans lequel le dispositif de chauffage (190, 290) comprend:
un premier dispositif de chauffage (190) conçu pour chauffer le premier outil de dénudage (160) puis la couche de revêtement externe (21) du câble optique serré (20) à travers le premier outil de dénudage (160); et
un second dispositif de chauffage (290) conçu pour chauffer le second outil de dénudage (260) puis la couche de revêtement externe (21) du câble optique serré (20) à travers le second outil de dénudage (260).

3. Système automatique de dénudage de fibre selon la revendication 2, dans lequel,
le premier dispositif de chauffage (190) comporte un premier bloc conducteur de chaleur (191), le premier outil de dénudage (160) étant monté sur le premier bloc conducteur de chaleur (191) ou en contact thermique direct avec le premier bloc conducteur de chaleur (191); et
le second dispositif de chauffage (290) comporte un second bloc conducteur de chaleur (291), le second outil de dénudage (260) étant monté sur le second bloc conducteur de chaleur (291) ou en contact thermique direct avec le second bloc conducteur de chaleur (291).

4. Système automatique de dénudage de fibre selon la revendication 1, dans lequel,
le premier module de dénudage comprend en outre un premier capteur (170) conçu pour détecter si la première courroie de dénudage a été utilisée entièrement; et
le second module de dénudage comprend en outre un second capteur (270) conçu pour détecter si la seconde courroie de dénudage a été utilisée entièrement.

5. Système automatique de dénudage de fibre selon la revendication 4, dans lequel,
le premier module de dénudage comprend en outre une paire de premiers rouleaux (130, 140) qui sont situés sur les deux côtés du premier outil de dénudage (160), la première courroie de dénudage étant tendue sur la paire des premiers rouleaux (130, 140) et le premier outil de dénudage (160); et
le second module de dénudage comprend en outre une paire de seconds rouleaux (230, 240) qui sont situés sur deux côtés du second outil de dénudage (260), la seconde courroie de dénudage étant tendue sur la paire de seconds rouleaux (230, 240) et le second outil de dénudage (260), et dans lequel
le premier module de dénudage comprend en outre un premier rouleau de serrage (150) conçu pour ajuster une tension de la première courroie de dénudage; et
le second module de dénudage comprend en outre un second rouleau de serrage (250) conçu pour ajuster une tension de la seconde courroie de dénudage.

6. Système automatique de dénudage de fibre selon la revendication 5, dans lequel,
le premier module de dénudage est monté sur une première plaque de montage (100) et le second module de dénudage est monté sur une seconde plaque de montage (200); et
un mécanisme d'entraînement de plaque conçu pour entraîner la première plaque de montage (100) à se déplacer de manière à permettre au premier outil de dénudage (160) monté sur la première plaque de montage (100) d'être mobile par rapport au second outil de dénudage (260) monté sur la seconde plaque de montage (200) de manière à desserrer ou bloquer le câble optique (20).

7. Système automatique de dénudage de fibre selon la revendication 6, dans lequel,
la première plaque de montage (100) et la second plaque de montage (200) sont montées de manière mobile sur la même plaque de base fixe verticale (1000); et
la première plaque de montage (100) est située juste au-dessus de la seconde plaque de montage (200).

8. Système automatique de dénudage de fibre selon la revendication 7, dans lequel,
un rail (1100) s'étendant verticalement est disposé sur la plaque de base fixe (1000);
un premier coulisseau (101) est disposé sur la première plaque de montage (100) et en prise coulissante avec le rail (1100) de manière à se déplacer vers le haut et vers le bas le long du rail (1100); et
un second coulisseau (201) est disposé sur la seconde plaque de montage (200) et en prise coulissante avec le rail (1100) de manière à se déplacer vers le haut et vers le bas le long du rail (1100).

9. Système automatique de dénudage de fibre selon la revendication 8, comprenant en outre:
un dispositif à jet d'air (280) conçu pour projeter de l'air en direction du premier outil de dénudage (160) et du second outil de dénudage (260), de manière à éliminer les résidus de la couche de revêtement externe (21) adhérant sur le premier outil de dénudage (160) et le second outil de dénudage (260).

10. Système automatique de dénudage de fibre selon la revendication 9, dans lequel,
le dispositif à jet d'air (280) est monté sur l'une de la première plaque de montage (100) et de la seconde plaque de montage (200).

11. Système automatique de dénudage de fibre selon la revendication 10, comprenant en outre:
un mécanisme de transport de câble (400) conçu pour placer le câble optique (20) à dénuder sur le second outil de dénudage (260) et pour déplacer le câble optique dénudé (20) hors du second outil de dénudage (260).

12. Système automatique de dénudage de fibre selon la revendication 11, comprenant en outre:
une plaque de recouvrement (2000) montée sur la plaque de base fixe (1000),
dans laquelle un espace destiné à recevoir le premier module de dénudage et le second module de dénudage est défini entre la plaque de recouvrement (2000) et la plaque de base (1000), et la plaque de recouvrement (2000) est munie d'une ouverture (2100), à travers laquelle le câble (20) peut être placé entre le premier outil de dénudage (160) et le second outil de dénudage (260).

13. Système de dénudage automatique de fibre selon la revendication 1, dans lequel le second outil de dénudage (160) comprend en outre une partie lame conçue pour découper une encoche supplémentaire dans au moins l'un des deux bords latéraux de la couche de revêtement externe (21) du câble optique (20).

14. Procédé de dénudage automatique de fibre, comprenant:
le serrage d'un câble (20) à dénuder entre une première courroie de dénudage tendue et une seconde courroie de dénudage tendue, et la découpe d'une encoche dans au moins un des deux bords latéraux d'une couche de revêtement externe (21) du câble (20);
le chauffage de la couche de revêtement externe (21) du câble (20) formée avec l'encoche de manière à ramollir la couche de revêtement externe (21) du câble (20);
l'entraînement de la première courroie de dénudage et de la seconde courroie de dénudage afin d'enlever un segment de la couche de revêtement extérieure (21), qui a été ramollie, de l'encoche par la première courroie de dénudage et la seconde courroie de dénudage, de manière à ce qu'elle se déplace;
séparer la première courroie de dénudage tendue et la seconde courroie de dénudage tendue; et
enlever le câble dont le segment de la couche de revêtement extérieur a été dénudé.

15. Procédé automatique de dénudage de fibre selon la revendication 14, consistant en outre à:
après avoir dénudé le segment de la couche de revêtement extérieure (21) du câble (20), projeter également de l'air vers le premier outil de dénudage (160) et le second outil de dénudage (260), de manière à éliminer les résidus de la couche de revêtement externe (21) collés sur le premier outil de dénudage (160) et le second outil de dénudage (260).
